**Europäisches Patentamt**

**European Patent Office**

**Office européen des brevets**

(11) Veröffentlichungsnummer: **0 029 874**

**B1**

(12) **EUROPÄISCHE PATENTSCHRIFT**

(45) Veröffentlichungstag der Patentschrift: **05.09.84**

(21) Anmeldenummer: **80102532.1**

(22) Anmeldetag: **08.05.80**

(51) Int. Cl.³: **F 16 L 59/00, B 21 C 1/22**

(54) Verfahren zur kontinuierlichen Herstellung von wärmeisolierten Leitungsrohren und Vorrichtung zur Durchführung des Verfahrens.

(30) Priorität: **01.12.79 DE 2948484**

(43) Veröffentlichungstag der Anmeldung:
**10.06.81 Patentblatt 81/23**

(45) Bekanntmachung des Hinweises auf die
Patenterteilung:
**05.09.84 Patentblatt 84/36**

(84) Benannte Vertragsstaaten:
**AT BE CH FR GB IT LI NL SE**

(56) Entgegenhaltungen:
**DE-A-1 475 661**
**DE-A-2 305 348**
**DE-A-2 616 292**

(73) Patentinhaber: **Kabel- und Metallwerke
Gutehoffnungshütte Aktiengesellschaft
Kabelkamp 20 Postfach 260
D-3000 Hannover 1 (DE)**

(72) Erfinder: **Uhlmann, Otto
Am Westende 21
D-3167 Burgdorf (DE)**
Erfinder: **Uhlmann, Klaus-Peter
Zum Freden 38
D-4105 Bad Iburg (DE)**

EP 0 029 874 B1

Courier Press, Leamington Spa, England.

**Beschreibung**

Die Erfindung betrifft ein Verfahren zur kontinuierlichen Herstellung von wärmeisolierten Leitungsrohren, aus nahtlos hart -oder halbhart gezogenem Kupferohr mit einem Warmeisolationsmantel auf Kunststoffbasis.

Es sind für die Hausinstallationen, beispielsweise für Heizungsrohre und Warmwasserrohre wärmeisolierte Kupferrohre im Handel, welche entweder in Längen bis zu 50 m in Form eines Ringbundes gewickelt, also biegbar oder in Form von Stangen mit einer Länge von bis zu 10 m erhältlich sind.

Das wirtschaftliche Verfahren zur Herstellung von Kupferrohren geht von einem Preßblock oder Walzblock aus, welcher durch Kaltpilgern sowohl in seinem Durchmesser als auch in seiner Wanddicke reduziert wird. Mittels des Trommelziehverfahrens werden die Kupferrohre weiterhin im Querschnitt reduziert, wobei bei der Fertigung zu Stangen der letzte Zug auf einer Schlittenziehmaschine (Geradeauszug) durchgeführt wird. Dabei wird von einem Ring ausgegangen und die gezogenen Rohre in Längen von beispielsweise 5 m abgelängt.

Bei einem bekannten Verfahren (DE—A—2 305 348) werden derartige Rohre mittels einer Steckverbindung miteinander zugfest verbunden, diese Metallrohre im Kontinuierlichen Durchlaufisoliert und nach dem Isolieren an der Verbindungsstelle wieder Durchtrennt. Der wesentliche Nachteil dieses bekannten Vorgehens ist darin zu sehen, daß sowohl an der Ziehmaschine als auch an der Einlaufstelle der Ummantelungslinie zum Zwecke des Zusammensteckens der Einzelrohre je eine Person des Bedienungspersonals stehen muß.

Der vorliegenden Erfindung liegt die Aufgabe zugrunde, eine Verfahren anzugeben, mit dem wärmeisolierte Leitungsrohre in Form von Stangen bis zu 10 m wesentlich wirtschaftlicher herzustellen sind.

Diese Aufgabe wird bei einem Verfahren der eingangs erwähnten Art dadurch gelöst, daß von einem Ringbund abgezogenes bis auf den Fertigzug vorgezogenes Kupferrohr großer Länge in einem Arbeitsgang auf einer Ziehmaschine auf das Fertigmaß gezogen und gerichtet wird, mit einem Mantel aus Kunststoff umgeben wird, der Mantel abgekühlt wird und daran anschließend auf höchstens 10 m, vorzugsweise 5 m, abgelängt wird. Der wesentliche Vorteil ist darin zu sehen, daß durch die Zusammenlegung zweier Arbeitsgänge, die mit gleicher Fertigungsgeschwindigkeit ablaufen (ca. 50 m/min), Bedienungspersonal freigestellt und somit das Herstellungsverfahren wirtschaftlicher gestaltet werden kann. Aus einem Gewicht des Walzblockes oder Preßblockes von ca. 400 kg resultiert bei normalen Rohrabmessungen von 18 × 1 mm eine Gesamtrohrlänge von ca. 1.000 m, die ca. 20 Minuten in der Fertigungsanlage verbleibt. Das bedeutet, daß das Bedienungspersonal nur alle 20 Minuten an der Einlaufseite beschäftigt ist, um das Rohr in die Ziehmaschine einzufädeln und die neue Rohrlänge an die an der Ummantelungslinie befindliche anzuschließen.

Nach einer besonders günstigen Ausgestaltung des erfindungsgemäßen Verfahrens ist weiterhin vorgesehen, daß an dem Kupferrohr zwei Vorschubkräfte angreifen, von denen die eine unmittelbar hinter der Ziehvorrichtung und die andere unmittelbar vor der Ummantelungseinrichtung an dem Kupferrohr angreift und daß beide Vorschubeinrichtungen hinsichtlich der Geschwindigkeit regelbar sind. Während die Vorschubkraft, die unmittelbar hinter der Ziehvorrichtung an dem Kupferrohr angreift, im wesentlichen zur Aufbringung der Ziehkräfte erforderlich ist, dient die andere Vorschubkraft im wesentlichen dazu, die Rohrlänge durch die Ummantelungslinie zu schieben, insbesondere dann, wenn die erste Vorschubkraft an dem Kupferrohr nicht mehr angreift. Dir Steuerung ist aus dem Grunde vorteilhaft, damit beim Verbinden zweier Längen die Ummantelungslinie nicht angehalten werden muß, wie weiter hinten beschrieben ist. Da, wie bereits oben beschrieben, die Kupferrohrlängen im wesentlichen durch die Anlage hindurchgeschoben werden, ist eine Verbindung an sich nicht notwendig. Es hat sich jedoch als zweckmäßig erwiesen, die aufeinanderfolgenden Kupferrohrlängen vor der Ummantelungseinrichtung miteinander zu verbinden, vorzugsweise mittels eines Holzstopfens. Dieser Verbindungsstopfen gewährleistet eine zentrische Ausrichtung der Rohrenden gegeneinander. Die aus der Ziehmaschine austretenden Enden der aufeinanderfolgenden Kupferrohrlängen werden glattgesägt, um ein enges stirnseitiges Anlegen der Rohre zu ermöglichen. Das Sägen ist sinnvoll, da normalerweise das aus der Matrize austretende Rohrende nicht glatt ist und die sogenannte Spitze der nachfolgenden Rohrlänge verformt ist. Die Kupferrohrlängen werden auch im Bereich ihrer Stoßstellen bzw. Verbindungstellen mit einem Schlauch aus Kunststoff auf der Basis von mit Füllstoff angereichertem Polyvinylchlorid versehen, welcher nach innen ragende dreieckförmige Rippen aufweist, die sich auf der Oberfläche des Kupferrohres unter Bildung von in Längsrichtung des Rohres ununterbrochenen dreieckförmigen Kanälen abstützen. Diese Isolierschicht hat sich als recht montagefreundlich, erwiesen. Kupferrohre, an deren Wärmeisolierschicht höhere Anforderungen gestellt werden, werden vorzugsweise auch im Bereich ihrer Stoßstellen bzw. Verbindungsstellen mit einem vorzugsweise wendelförmigen Abstandshalter, vorzugsweise aus Schaumstoff umgeben, und unmittelbar darauf von eimem längseinlaufenden allmählich zum Rohr geformten Band koaxial umgeben, welches an seinen Bandkanten verschlossen wird. Auf das noch ebene Band wird ein Schäumfähiges Kunststoffgemisch aufgebracht, welches den Ringraum zwischen dem Kupferrohr und dem zum Rohr geformten Band ausschäumt. Solche Kunststoffgemische bestehen üblicherweise aus Polyurethan oder aus isocyanurath-modifiziertem Polyurethan. Mit dieser Isolierschicht können wärmeisolierte Leitungsrohre hergestellt werden, die dem Energieeinsparungsgesetz vollauf genügen. Das erfindungsgemäße Verfahren ermöglicht auch die Herstellung sogenannter halbharter Rohre. Hierzu wird das durch die vorgeschalteten Ziehoperationen Verfestigte Kupferrohr vor dem Fertigzug im Durchlauf weichgeglüht. Durch Auswahl der anschließenden Querschnittsabnahme kann man beliebige Festigkeitswerte im Kupferrohr erzeugen. Eine Vorrichtung zur Durchführung des Verfahrens ist durch die Hintereinanderschaltung eines Ringablaufes einer Schlittenziehmaschine, eines Richtrollenganges, eines Bandabzuges, einer Ummantelungseinrichtung und einer Trennvorrichtung gekennzeichnet, wobei die Fertigungsrichtung der Ziehmaschine der Fertigungsrichtung des Richtrollenganges, des Bandabzuges, der Ummantelungseinrichtung und der Trennvorrichtung entgegengesetzt ist.

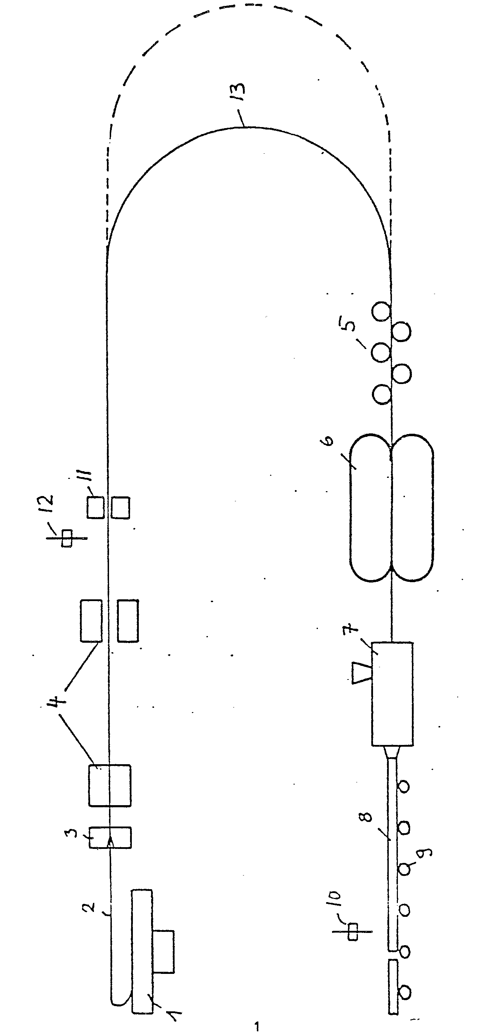

Die Erfindung ist anhand des in der Figur schematisch dargestellten Ausführungsbeispiels näher erläutert.

Von einem drehbaren Ringablaufbock 1 wird ein Kupferrohr 2 kontinuierlich abgezogen, durch eine Matrize 3 hindurchgeführt und mittels einer Schlittenziehmaschine 4, von deren Schlittenpaaren je eines an dem Kupferrohr 2 angreift und durch die Matrize 3 hindurchzieht, weitertransportiert. In Durchlaufrichtung hinter der Schlittenziehmaschine 4 ist ein Richtrollensatz 5 angeordnet, welcher das Kupferrohr 2 richtet. Ein Bandabzug 6 greift an dem Kupferrohr 2 an und führt dieses einer Ummantelungseinrichtung 7 zu, welche auf das Kupferrohr 2 einen Isolierschlauch aus füllstoffangereichertem Polyvinylchlorid oder, wie eingangs erwähnt, eine Isolierschicht auf der Basis von Polyurethanschaum aufbringt. Die Isolierhülle wird anschließend gekühlt und härtet dabei aus. Diese geschieht zweckmäßigerweise in einem nicht dargestellten Wasserbad. Nach dem Aushärten bzw. dem Auskühlen gelangt die ummantelte Kupferrohrlänge 8 auf einen Rollengang 9 und wird dort mittels einer fliegenden Säge 10 in Lieferlängen von 5 bis 10 m abgelängt. Der Rollengang 9 ist hinter der fliegenden Säge 10 mit eine höheren Geschwindigkeit angetrieben als die ummantelte Kupferrohrlänge 8, so daß die abgelängten Stücke einer Verpackungseinrichtung zugeführt werden, können.

Hat das Ende Kupferrohrlänge 2, die eine gesamte Länge von ca. 1.000 m aufweist, die Matrize 3 passiert, wird das Ende mittels eines Klemmbackenpaars 11 festgehalten, und zwar hinter der Ziehmaschine 4 und eine neue vorbereitete Kupferrohrlänge 2 auf den Ringablaufbock 1 aufgelegt und die Spitze durch die Matrize 3 hindurchgesteckt und von der Ziehmaschine 4 gefaßt. Beide Rohrenden werden mit der Säge 12 glattgesägt und mittels eines nicht näher bezeichneten Holzstopfens verbunden. Die Vorbereitungsarbeiten für die neue Kupferrohrlänge 2 bestehen aus den Arbeitsschritten Einfüllen von Ziehöl, Einführen eines Dornes, Anspitzen der Kupferrohrlänge 2. Während dieser Arbeiten läuft die Ummantelungslinie mit konstanter Geschwindigkeit weiter und entnimmt dabei das benötigte Kupferrohr 2 dem als Halbkreis ausgebildeten Speicher 13. Nach der Verbindung der Rohrlängen wird die Schlittenziehmaschine 4 mit höherer Geschwindigkeit angetrieben bis der Speicher 13 wieder gefüllt ist. (s. gestrichelte Linien)

## Patentansprüche

1. Verfahren zur kontinuierlichen Herstellung von wärmeisolierten Leitungsrohren, nahtlos hart -oder halbhart gezogenem Kupferrohr mit einem Wärmeisolationsmantel auf Kunststoffbasis, dadurch gekennzeichnet, daß von einem Ringbund abgezogenes bis auf den Fertigzug vorgezogenes Kupferrohr großer Länge in einem Arbeitsgang auf einer Ziehmaschine auf das Fertigmaß gezogen und gerichtet wird, mit einem Mantel aus Kunststoff umgeben wird, der Mantel abgekühlt wird, und daran anschließend auf höchstens 10 m, vorzugsweise von 5 m abgelängt wird.

2. Verfahren nach Anspruch 1, dadurch gekennzeichnet, daß an dem Kupferrohr zwei Vor-Schubkräfte angreifen, von denen die eine unmittelbar hinter der Ziehvorrichtung und die andere unmittelbar vor der Ummantelungseinrichtung an dem Kupferrohr angreift und daß beide Vorschubeinrichtungen hinsichtlich der Geschwindigkeit regelbar sind.

3. Verfahren nach Anspruch 1 oder 2, dadurch gekennzeichnet, daß die aufeinanderfolgenden Kupferrohrlängen vor der Ummantelungseinrichtung miteinander verbunden werden.

4. Verfahren nach Anspruch 1 oder einem der folgenden, dadurch gekennzeichnet, daß die aus der Ziehmaschine austretenden Enden der aufeinanderfolgenden Kupferrohrlängen glattgesägt werden.

5. Verfahren nach Anspruch 1 oder einem der folgenden, dadurch gekennzeichnet, daß die Kupferrohrlängen auch im Bereich ihrer Stoßstellen bzw. Verbindungsstellen mit einem Schlauch aus Kunststoff auf der Basis von mit Füllstoff angereichertem Polyvinylchlorid versehen werden, welcher nach innen ragende dreieckförmige Rippen aufweist, die sich auf der Oberfläche unter Bildung von in Längsrichtung des Rohres ununterbrochenen dreieckförmigen Kanälen abstützen.

6. Verfahren nach anspruch 1 oder einem der folgenden, dadurch gekennzeichnet, daß die Kupferrohrlängen auch im Bereich ihrer Stoßstellen bzw. Verbindungsstellen mit einem vorzugsweise wendelförmigen Abstandshalter, vorzugsweise aus Schaumstoff umgeben werden und unmittelbar darauf von einem längseinlaufenden allmählich zum Rohr geformten Rand koaxial umgeben werden, welches an seinen Bandkanten verschlossen wird und daß auf das ebene Band ein schäumfähiges Kunststoffgemisch aufgebracht wird, welches den Ringraum zwischen dem Kupferrohr und dem zum Rohr geformten Band ausschäumt.

7. Verfahren nach Anspruch 1 oder einem der folgenden, dadurch gekennzeichnet, daß das Kupferrohr vor dem Ziehen in kontinuierlichem Durchlauf weichgeglüht wird.

8. Vorrichtung zur Durchführung des Verfahrens nach Anspruch 1 oder einem der folgenden, gekennzeichnet durch die Hintereinanderschaltung eines Ringablaufbockes (1), einer Schlittenziehmaschine (4), eines Richtrollenganges (5), eines Bandabzuges (6), einer Ummantelungseinrichtung (7) une einer Trennvorrichtung (10), wobei die Fertigungsrichtung der Ziehmaschine (4) der Fertigungsrichtung des Richtrollenganges (5), des Bandabzuges (6), der Ummantelungseinrichtung (7) und der Trennvorrichtung (10) entgegengesetzt ist.

9. Vorrichtung nach Anspruch 8, dadurch gekennzeichnet, daß hinter der Schlittenziehmaschine (4) eine das Rohrende einspannendes Klemmbackenpaar (11) angeordnet ist.

**Revendications**

1. Procédé pour la fabrication continue de conduites tubulaires thermiquement isolées, à partir d'un tube de cuivre étiré à l'état dur ou semi-dur, sans soudure, au moyen d'un unrobage d'isolation thermique à base de matière plastique, caractérisé en ce qu'un tube de cuivre de grande longueur, étiré préalablement jusqu'au point qui précède la passe de finissage, est tiré d'une couronne pour être, en une seule opération, sur une machine à etirer, étiré à la dimension finale et dessé, enrobé d'une gaine de matière plastique, cette gaine étant ensuite refroidie et le tube étant mis à des longueurs de 10 m au maximum, et de préférence de 5 m.

2. Procédé suivant la revendication 1, caractérisé en ce que deux forces d'avancement agissent sur le tube de cuivre, l'une agissant immédiatement après le dispositif d'étirage, et l'autre immédiatement avant l'installation d'enrobage sur le tube en cuivre, et que les deux dispositifs d'avancement sont réglables en ce qui concerne leur vitesse.

3. Procédé suivant l'une des revendications 1 et 2, caractérisé en ce que les longueurs successives de tubes de cuivre sont reliées ensemble avant d'arriver à l'installation d'enrobage.

4. Procédé suivant l'une quelconque des revendications 1 à 3, caractérisé en ce que les extrémités sortant de la machine à étirer des longueurs de tubes de cuivre successives sont sciées de façon unie.

5. Procédé suivant l'une quelconque des revendications 1 à 4, caractérisé en ce que les longueurs de tubes de cuivre sont pourvues même dans la zone de leurs points de rencontre ou de jonction d'un tuyau de chlorure de polyvinyle riche en charges qui présente des nervures triangulaires dirigées ver l'intérieur, qui s'appuient sur la surface du tube en cuivre en formant des canaux triangulaires ininterrompus dans le sens de la longueur des tubes.

6. Procédé suivant l'une quelconque des revendications 1 à 5, caractérisé en ce que les longueurs de tubes de cuivre sont entourées même dans la zone de leurs points de rencontre ou de jonction, d'un organe de maintien de la distance de préférence de forme hélicoïdale et de préférence en mousse et immédiatement par-dessus, sont entourés coaxialement d'une bande arrivant sur la longueur façonnée progressivement que l'on ferme par ses bords en un tuyau, et que, sur la bande plane, on applique un mélange de matière plastique capable de former une mousse qui remplit de mousse l'espace annulaire entre le tube de cuivre et la bande façonnée en un tuyau.

7. Procédé suivant l'une quelconque des revendications 1 à 6, caractérisé en ce que le tube de cuivre subit, dans un passage continu avant l'étirage, un recuit d'adoucissement.

8. Dispositif pour l'exécution du procédé suivant l'une quelconque des revendications 1 à 7, caractérisé en ce qu'on monte, à la suite les uns des autres, un chevalet (1) de déroulement d'une couronne, une machine à étirer à chariots (4), une série de rouleaux redresseurs (5), un extracteur de bande (6), une installation d'enrobage (7), et un dispositif de tronçonnage (10), le sens d'opération de la machine à étirer (4) étant à l'opposé du sens d'opération de la série de rouleaux redresseurs (5), de l'extracteur de bande (6), de l'installation d'enrobage (7), et du dispositif de tronçonnage (10).

9. Dispositif suivant la revendication 8, caractérisé en ce que, après la machine à étirer à chariots (4), il est disposé une paire de mâchoires (11) de serrage qui maintient l'extrémité du tube.

**Claims**

1. Process for the continuous manufacture of thermally insulated tubing, for pipework installations, starting from a seamless copper tube in the hard-drawn or semihard-drawn condition, this tubing possessing a plastic-based thermally insulating sheath, characterised in that a long length of copper tube, which has been pre-drawn, save for the finishing pass, is pulled from a coil and is drawn to the finished dimensions, on a drawing machine, in one pass, is straightened, is encased in a plastic sheath, which is cooled, and the tubing is thereafter cut into lengths not exceeding 10 metres, and preferably into 5-metre lengths.

2. Process according to Claim 1, characterised in that two forward-feed forces act on the copper tube, one immediately downstream of the drawing appliance, and the other immediately in advance of the sheathing apparatus, and in that the two forward-feed devices can be controlled in a manner such as to adjust the speed.

3. Process according to Claim 1 or 2, characterised in that the successive lengths of copper tube are joined together in advance of the sheathing apparatus.

4. Process according to Claim 1, or to one of the following claims, characterised in that the ends of the successive lengths of copper tube, emerging from the drawing machine, are sawn off, to render them smooth.

5. Process according to Claim 1, or to one of the following claims, characterised in that the lengths of cooper tube are furnished with a flexible plastic tube, even in the vicinity of the points at which they are joined together, this plastic tube being based on filler-enriched polyvinyl chloride and possessing inward-projecting triangular ribs which are supported on the surface of the tube, forming triangular channels which are interrupted in its longitudinal direction.

6. Process according to Claim 1, or to one of the following claims, characterised in that the lengths of copper tube are furnished with a the vicinity of the points at which they are joined together, by a spacer device which is preferably of helical form and is preferably made of foamed plastic, and, coaxially, by a strip, positioned directly on the spacer device, this strip running in longitudinally, being gradually shaped to form a tube, and being sealed at its edges, and in that a foamable mix of plastics is applied to the flat strip, this mix foam-filling the annular space between the copper tube and the strip which has been shaped to form a tube.

7. Process according to Claim 1 or to one of the following claims, characterised in that the copper tube is annealed, to the soft condition, in a continuous operation which precedes the drawing operation.

8. Arrangement for carrying out the process according to Claim 1 or to one of the following claims, characterised by the series-installation of a coil pay-out stand (1), a carriage-type drawing machine (4), a set of straightening rolls (5), a belt-type pull-off facility (10), the production direction of the drawing machine (4) being opposed to that of the set of straightening rollers (5), of the belt-type pull-off device (6), of the sheathing apparatus (7), and of the cutting-off facility (10).

9. Arrangement according to Claim 8, characterised in that a pair of clamping jaws (11) is located downstream of the carriage-type drawing machine (4), these jaws (11) clamping the end of the tube.

0 029 874